# EUROPÄISCHE PATENTSCHRIFT

(11) **EP 0 697 298 B1**
(45) Veröffentlichungstag und Bekanntmachung des Hinweises auf die Patenterteilung: **08.10.1997**
(21) Anmeldenummer: 95112067.4
(22) Anmeldetag: 01.08.1995
(51) Int. Cl.: B60G 7/00, F16F 1/38

(54) **Radial und axial belastbares Buchsenlager für Fahrwerksteile in Kraftfahrzeugen**
Radially and axially loaded bush for motor vehicle suspension elements
Palier supportant des charges axiales et radiales pour éléments de suspension de véhicules à moteur

(30) Priorität: 17.08.1994 DE 4429102
(43) Veröffentlichungstag der Anmeldung: 21.02.1996
(73) Patentinhaber: LEMFÖRDER METALLWAREN AG., D-49441 Lemförde (DE)
(72) Erfinder: Kammel, Helmut, D-49401 Damme (DE); Weitzmann, Jürgen, D-49434 Neuenkirchen (DE)

(56) Entgegenhaltungen:
- EP-A- 0 186 315
- EP-A- 0 485 697
- EP-A- 0 520 187
- CH-A- 394 723
- DE-U- 7 230 619
- FR-A- 1 439 913
- GB-A- 2 202 923

## Beschreibung

Die Erfindung bezieht sich auf ein radial und axial elastisches Buchsengleitlager für Fahrwerksteile in Kraftfahrzeugen nach dem Oberbegriff des Patentanspruches 1.

Ein solches Buchsenlager ist aus EP-A-186315 bekannt. Durch diese Druckschrift wird ein radial und axial elastisches Buchsenlager für Fahrwerksteile in Kraftfahrzeugen offenbart, welches aus einem in ein erstes Fahrwerksteil einbaubaren Innenrohr, einer darauf spielfrei und gleitend beweglich angeordneten Außenbuchse, einem ebenfalls spielfreien Axiallager zwischen dem Innenrohr und der Außenbuchse, einem die Außenbuchse festhaftend umschließenden, in ein Lagerauge eines zweiten Fahrwerksteiles axial einpreßbaren Elastomerkörper besteht, der sich zwischen einem Radialflansch und dem Axiallager erstreckt und eine einstückig angeformte, das Axiallager axial übergreifende, zur Lagermitte gerichtete Dichtlippe aufweist, wobei ein Axiallager mit einer dieses Axiallager umgreifenden Dichtlippe an beiden axialen Lagerenden ausgebildet ist und eines der beiden Axiallager im Außendurchmesser der das Axiallager umgreifenden Dichtlippe einen gegenüber dem Lagerauge kleineren Durchmesser aufweist. Bei dem bekannten Buchsenlager bestehen beide Axiallager jeweils aus einer an einem axialen Ende des Innenrohres befestigten Widerlager, die beide mit einer sich radial erstreckenden, mit einem gute Gleiteigenschaften aufweisenden Werkstoff beschichteten Gleitfläche aneinanderliegen.

Ein solches Buchsenlager ist in der Ausbildung einteilig, kann in das Lagerauge eines metallischen Fahrwerksteiles von einer Seite her eingepreßt werden und ist in der Lage, sowohl Radialkräfte als auch Axialkräfte in beiden Richtungen zu übertragen. Zur Übertragung eventueller Axialkräfte in Gegenrichtung wird der Elastomerkörper mit einem umlaufenden Ringwulst ausgestattet, der den Rand des Lagerauges auf der gegenüberliegenden Seite des Fahrwerksteiles hintergreift. Es besteht jedoch die Gefahr, daß sich dabei insbesondere in dem Axiallager mit dem geringeren Durchmesser bzw. in dem bei der Montage durch das Lagerauge eines Fahrwerksteiles hindurchgeschobenen Axiallager Materialspannungen in dem Elastomerkörper und insbesondere in der diesem Axiallager zugeordneten Dichtlippe aufbauen, die die Dichtigkeit und damit die Lebensdauer des Lagers erheblich beeinträchtigen.

Aus der CH-A-394723 ist es bekannt, daß eine Außenbuchse mit zwei Axiallagern entweder mit angeformten Scheiben oder mit separaten, sich am axialen Ende der Außenbuchse abstützenden Scheiben ausgeführt werden kann.

Der Erfindung liegt die Aufgabe zugrunde, ein Buchsengleitlager für Fahrwerksteile in Kraftfahrzeugen mit den Merkmalen des Oberbegriffes des Patentanspruches 1 in der Weise weiterzubilden, daß die Gefahr der Entstehung von Materialspannungen vor allem im Werkstoff der Dichtlippe am Lagerende mit dem kleineren Durchmesser verringert wird.

Diese Aufgabe löst die Erfindung durch eine Ausbildung mit Merkmalen nach dem Patentanspruch 1.

Die umlaufende Rille am Übergang des Elastomerkörpers zu der an dem Lagerende mit dem gegenüber dem Lagerauge geringeren Durchmesser einstückig an den Elastomerkörper aus dem gleichen Werkstoff angeformten Dichtlippe bewirkt, daß Spannungen aus dem hülsenförmigen Korpus des Elastomerkörpers sich in der Dichtlippe ausbreiten, wodurch erreicht wird, daß durch Montagearbeiten oder durch im Betrieb auf das Lager einwirkende Kräfte im Werkstoff des Elastomerkörpers verursachte Spannungen sich nicht auf den Dichtlippenbereich übertragen und somit Undichtigkeiten in der Dichtung vermieden werden.

Beide Axiallager des Buchsenlagers bestehen in einer an sich bekannten Weise jeweils aus einer sich gegen ein axiales Ende der Außenbuchse abstützenden Scheibe und einem auf dem axialen Ende des Innenrohres befestigten Widerlager, die beide mit einer sich radial erstreckenden, gegebenenfalls mit einem gute Gleiteigenschaften aufweisenden Werkstoff beschichteten Gleitfläche aneinanderliegen.

In der Zeichnung ist ein Ausführungsbeispiel der Erfindung dargestellt. Es zeigen:
- Figur 1: einen Schnitt in einer Achsebene durch ein Buchsenlager vor dem Einbau in ein Lagerauge eines Fahrwerksteiles und
- Figur 2: einen Schnitt entsprechend Figur 1 nach dem Einbau.
- Figuren 3 bis 6: weitere Ausbildungsvarianten in Schnittdarstellungen entsprechend Figur 1

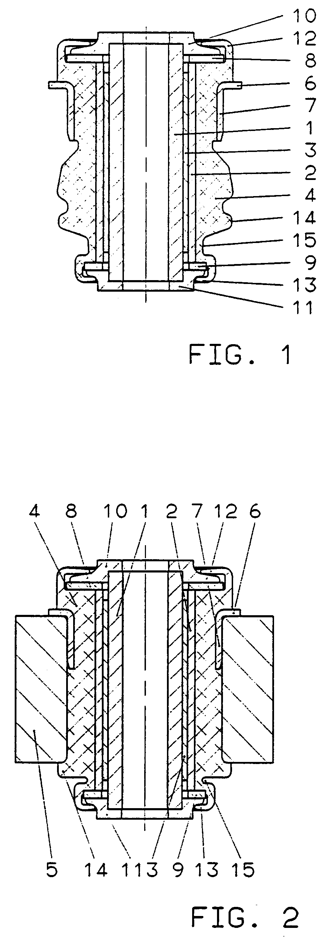

Das Buchsenlager besteht aus einem Innenrohr 1, einer darauf spielfrei und gleitend drehbeweglich angeordneten Außenbuchse 2, wobei zwischen beiden gegebenenfalls eine die Gleiteigenschaften des Buchsenlagers erhöhende Gleitbuchse 3 aus einem gute Gleiteigenschaften aufweisenden Werkstoff oder lediglich eine die Gleiteigenschaften verbessernde Beschichtung vorgesehen ist. Die Außenbuchse 2 ist in einem diese vollständig umschließenden Elastomerkörper 4 festhaftend angeordnet. In Anpassung an die gewünschte Elastizitätscharakteristik des Buchsenlagers weist der Elastomerkörper 4 eine in Figur 1 dargestellte Umfangsprofilierung auf. Der Elastomerkörper 4 ist in das Lagerauge eines Fahrwerksteiles 5 von einer Seite her einpreßbar und stützt sich dann mit dem Radialflansch 6 eines Stützringes 7 an einer Seite des Fahrwerksteiles 5 gegen den Rand des Lagerauges ab. Der Stützring 7 ist mit dem Elastomerkörper 4 ebenfalls festhaftend verbunden, zum Beispiel anvulkanisiert. An beiden axialen Enden sind Axiallagerungen zur Übertragung axialer Kräfte ausgebildet. Jede der beiden Axiallagerungen besteht jeweils aus einer sich gegen das axiale Ende der Außenbuchse 2 abstützenden Scheibe 8 bzw. 9 und einem auf dem axialen Ende des Innenrohres 1 befestigten Widerlager 10,11, so daß die Gleitscheibe 8 mit dem Widerlager 10 und die Gleitscheibe 9 mit dem Widerlager 11 jeweils eine gemeinsame Gleitfläche aufweisen, die gegebenenfalls mit einem gute Gleiteigenschaften aufweisenden Werkstoff beschichtet ist. Der Elastomerkörper 4 übergreift an beiden axialen Enden mit einer einstückig aus dem gleichen Werkstoff angeformten Dichtlippe 12 bzw. 13 sowohl die Axiallagerung 8,10 als auch die Axiallagerung 9,11. Das auf der Seite des Stützringes 7 angeordnete Axiallager 8,10 ist in herkömmlicher Weise ausgebildet, so daß die Scheibe 8 einen größeren Durchmesser als der Stützring 7 aufweist, wie es in der Zeichnung erkennbar ist. An dem gegenüberliegenden axialen Ende weist die Axiallagerung 9,11 mit der diese Bauteile axial umgreifenden Dichtlippe 13 einen gegenüber dem Innendurchmesser des Lagerauges in dem Fahrwerksteil 5 kleineren Durchmesser auf. Dadurch wird es möglich, das Buchsenlager in seiner Gesamtheit entsprechend der Darstellung in Figur 1 vorzumontieren und von einer Seite her in das Lagerauge des Kraftfahrzeugteiles 5 einzupressen. In der Hauptbelastungsrichtung werden Axialkräfte durch den Stützring 7 mit dem Radialflansch 6 auf das Kraftfahrzeugteil 5 übertragen. Eventuelle Axialkräfte in Gegenrichtung überträgt ein am Ende des Elastomerkörpers 4 angeordneter Ringwulst 14, der an dem dem Stützring 7 gegenüberliegenden axialen Ende des Buchsenlagers den Rand des Lagerauges im Fahrwerksteil 5 hintergreift, wie es in der Figur 2 dargestellt ist. Die Verbindung des Buchsenlagers mit dem zweiten Fahrwerksteil erfolgt in an sich bekannter Weise durch einen in das Innenrohr einsteckbaren Bolzen.

An dem Lagerende mit dem gegenüber dem Lagerauge geringeren Durchmesser ist am Übergang des Elastomerkörpers 4 zu der einstückig angeformten Dichtlippe 13 aus dem gleichen Werkstoff eine umlaufende Rille 15 ausgebildet. Diese Rille 15 vermeidet die Übertragung eventueller Spannungen in dem Elastomerkörper auf den Dichtlippenbereich und sorgt somit für eine bessere Abdichtung an den Enden des Lagers, wie es weiter oben schon erwähnt wurde.

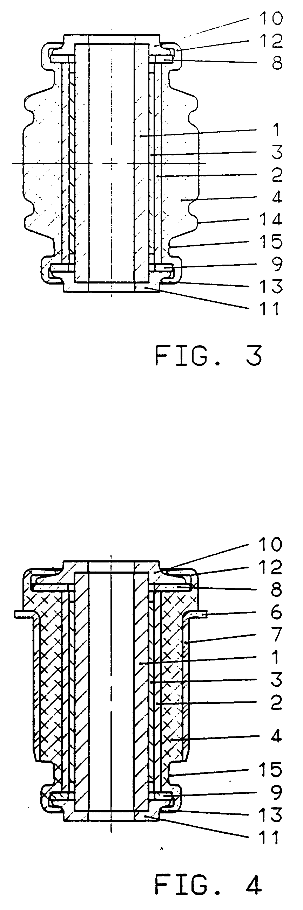

In einer Abänderung der Anordnung nach Figur 1 ist in der Figur 3 ein Lager dargestellt, bei dem die Axiallager an beiden Lagerenden jeweils gleiche Außendurchmesser aufweisen. Figur 4 zeigt die Ausbildung eines solchen Lagers mit einer durchgehenden Außenhülse 7 anstelle einer verkürzten Ausbildung entsprechend Figur 1 bei einem Lager mit im Durchmesser ungleichen Axiallagern, wobei ein radialer Flanschring 6 an der Seite der größeren Durchmesserausbildung angeordnet ist, so daß das Lager mit der gegenüberliegenden Lagerseite voraus in das Lagerauge eines Kraftfahrzeugteiles eingebaut werden kann..

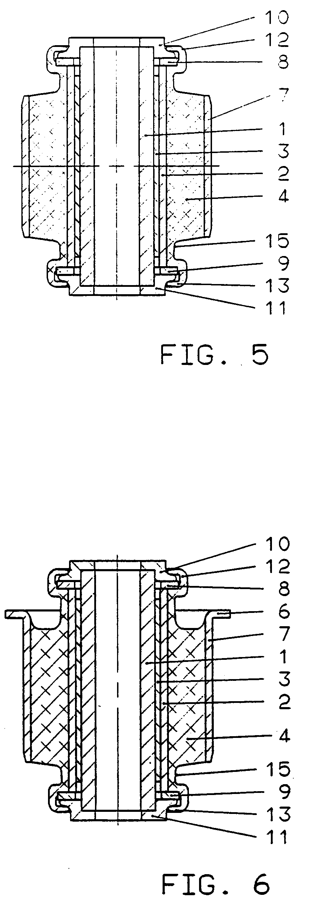

Bei der Lagerausbildung nach Figur 5 weisen beide Axiallager die gleichen Durchmesser auf, wobei die Übertragung von Axialkräften auf die zulässigen Schubspannungen in dem Elastomerkörper 4 beschränkt ist. Davon weicht die Ausbildung in Figur 6 dahingehend ab, daß an dem einen Ende der den Elastomerkörper umschließenden Außenhülse 7 ein Radialflansch 6 vorgesehen ist, durch den zugleich eine Fixierung des Lagers beim Einbau erreicht wird.

## Patentansprüche

1. Radial und axial elastisches Buchsengleitlager für Fahrwerksteile in Kraftfahrzeugen, bestehend aus
- einem in ein erstes Fahrzeugteil fest einbaubaren Innenrohr (1),
- einer darauf spielfrei und gleitend drehbeweglich angeordneten Außenbuchse (2),
- einer ebenfalls spielfreien Axiallagerung zwischen dem Innenrohr und der Außenbuchse sowie
- einem die Außenbuchse festhaftend umschließenden, in ein Lagerauge eines Zweiten Fahrwerksteiles (4) axial einpreßbaren Elastomerkörper,
- je einem an beiden axialen Lagerenden ausgebildeten Axiallager, wobei der Elastomerkörper sich zwischen den beiden Axiallagern erstreckt und jeweils eine einstückig angeformte, das Axiallager axial übergreifende, zur Lagermitte gerichtete Dichtlippe aufweist,
- und wobei wenigstens eines der beiden Axiallager (8,10 bzw. 9,11) im Außendurchmesser der das Axiallager umgreifenden Dichtlippe (13) einen gegenüber dem Lagerauge kleineren Durchmesser aufweist,
dadurch gekennzeichnet, daß am Übergang des Elastomerkörpers (4) zu der an dem Lagerende mit dem gegenüber dem Lagerauge geringeren Durchmesser einstückig an den Elastomerkörper aus dem gleichen Werkstoff angeformten Dichtlippe (12 bzw. 13) eine umlaufende Rille (15) vorgesehen ist.

2. Buchsengleitlager nach Anspruch 1, dadurch gekennzeichnet, daß die beiden Axiallager (8,10 bzw. 9,11) jeweils aus einer sich gegen ein axiales Ende der Außenbuchse (2) abstützenden Scheibe (8 bzw. 9) und einem auf dem axialen Ende des Innenrohres (1) befestigten Widerlager (10 bzw. 11) bestehen, die beide mit einer sich radial erstreckenden, gegebenenfalls mit einem gute Gleiteigenschaften aufweisenden Werkstoff beschichteten Gleitfläche aneinanderliegen.

3. Buchsengleitlager nach den Ansprüchen 1 oder 2, dadurch gekennzeichnet, daß die beiden Widerlager (10,11) an den axialen Enden eines einteiligen Innenrohres (1) befestigt und jeweils gegen ein Stirnende der ebenfalls einteiligen Außenbuchse (2) wirksam sind.

## Claims

1. Radially and axially flexible bush plain bearing for chassis parts in motor vehicles, comprising
- an inner tube (1) tightly fittable into a first vehicle part,
- an outer bush (2) disposed thereon without clearance and in a sliding, rotatable manner,
- a likewise clearance-free thrust bearing arrangement between the inner tube and the outer bush as well as
- an elastomeric body, which adherently encloses the outer bush and is pressable axially into a bearing eye of a second chassis part (4),
- one thrust bearing formed at each axial end of the bearing, wherein the elastomeric body extends between the two thrust bearings and has in each case an integrally formed sealing lip axially overlapping the thrust bearing and directed towards the centre of the bearing,
- and wherein at least one of the two thrust bearings (8, 10 or 9, 11) in the outside diameter of the sealing lip (13) embracing the thrust bearing has a diameter smaller than the bearing eye,
characterized in that at the transition of the elastomeric body (4) to the sealing lip (12 or 13), which is integrally formed on the elastomeric body from the same material at the bearing end with the diameter smaller than the bearing eye, a circumferential groove (15) is provided.

2. Bush plain bearing according to claim 1, characterized in that the two thrust bearings (8, 10 and 9, 11) in each case comprise a disc (8 or 9), which is supported against an axial end of the outer bush (2), and an abutment (10 or 11) fastened on the axial end of the inner tube (1), which disc and abutment are applied against one another by a radially extending sliding surface optionally coated with a material having good sliding properties.

3. Bush plain bearing according to claims 1 or 2, characterized in that the two abutments (10, 11) are fastened to the axial ends of a single-piece inner tube (1) and are effective in each case against a front end of the likewise single-piece outer bush (2).

## Revendications

1. Palier lisse à élasticité radiale et axiale pour pièces de châssis de véhicules automobiles, constitué
- d'un tube intérieur (1) pouvant être monté fixe dans une première partie de châssis,
- d'une douille extérieure (2) agencée sur ledit tube de manière à pouvoir tourner par glissement sans jeu,
- d'un palier axial également sans jeu entre le tube intérieur et la douille extérieure, et
- d'un corps élastomère entourant de manière solidaire la douille extérieure et susceptible d'être refoulé axialement dans un oeillet de palier d'une deuxième partie de châssis (4),
- respectivement d'un palier axial formé sur les deux extrémités axiales du palier, ledit corps élastomère s'étendant entre les deux paliers axiaux et présentant, respectivement, une lèvre d'étanchéité formée d'une pièce sur ledit corps, s'accrochant axialement sur le palier axial et dirigée vers le centre du palier,
- au moins l'un des deux paliers axiaux (8, 10 ou 9, 11) présentant, sur le diamètre extérieur de la lèvre d'étanchéité (13) enveloppant le palier axial, un diamètre plus petit par rapport à l'oeillet de palier, caractérisé en ce qu'il est prévu, au niveau de la transition entre le corps élastomère (4) et la lèvre d'étanchéité (12 ou 13) moulée d'une pièce sur le corps élastomère dans le même matériau, à l'extrémité du palier de diamètre plus petit par rapport à l'oeillet de palier, une rainure périphérique (15).

2. Palier lisse selon la revendication 1, caractérisé en ce que les deux paliers axiaux (8, 10 ou 9, 11) sont constitués respectivement d'un disque (8 ou 9) s'appuyant contre une extrémité axiale de la douille extérieure (2) et d'une butée (10 ou 11) fixée sur l'extrémité axiale du tube intérieur (1), qui sont tous deux contigus par le biais d'une surface glissante s'étendant radialement, éventuellement revêtue d'un matériau présentant de bonnes propriétés de glissement.

3. Palier lisse selon les revendications 1 ou 2, caractérisé en ce que les deux butées (10, 11) sont fixées aux extrémités axiales d'un tube intérieur d'une pièce (1) et agissent respectivement contre une extrémité frontale de la douille glissante (2) également d'une pièce.
